(19) Europäisches Patentamt
European Patent Office
Office européen des brevets

(11) Publication number: **0 135 168 B1**

# (12) EUROPEAN PATENT SPECIFICATION

(45) Date of publication of patent specification: **28.02.90**

(51) Int. Cl.[5]: **C 08 F 257/02**, C 08 F 212/06, C 08 F 4/48, C 08 F 297/04

(21) Application number: **84109940.1**

(22) Date of filing: **21.08.84**

## (54) A process for preparation of copolymers of isopropenyl aromatic monomer and vinyl aromatic monomer.

(30) Priority: **22.08.83 US 525336**
**13.07.84 US 630906**

(43) Date of publication of application:
**27.03.85 Bulletin 85/13**

(45) Publication of the grant of the patent:
**28.02.90 Bulletin 90/09**

(84) Designated Contracting States:
**BE DE FR GB IT NL SE**

(56) References cited:
**EP-A-0 014 947**
**EP-A-0 118 572**
**DE-A-2 015 249**
**FR-A-1 573 989**
**FR-A-2 226 412**
**FR-A-2 229 710**

(73) Proprietor: **THE DOW CHEMICAL COMPANY**
**2030 Dow Center Abbott Road P.O. Box 1967**
**Midland Michigan 48640-1967 (US)**

(72) Inventor: **Lo, Grace Y-S.**
**1032 Scott Street**
**Midland Michigan 48640 (US)**

(74) Representative: **Hann, Michael, Dr. et al**
**Patentanwälte Dr. Michael Hann Dr. H.-G. Sternagel Sander Aue 30**
**D-5060 Bergisch Gladbach 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 135 168 B1

**Description**

Block polymers of α-methylstyrene and butadiene of the ABA configuration wherein A is a block of α-methylstyrene and B is a butadiene block are disclosed in British Patent 1,444,680 and the *Journal of Applied Polymer Science*, Volume 22, 2907—2913 (1978). α-Methylstyrene has a relatively low ceiling temperature of about 61° centrigrade at which the rate of depolymerization equals the rate of polymerization. Generally α-methylstyrene polymerizes slowly and because of the low ceiling temperature, the process must be carried out at relatively low temperatures.

Copolymers of styrene and α-methylstyrene are very difficult to prepare in an economic fashion although their desirability is set forth in U.S. Patents 4,431,777 and 4,427,837. The reactivity ratio between styrene and α-methylstyrene is such that to obtain a one-to-one copolymer, an economically unreasonable quantity of α-methylstyrene must be employed. In an anionic polymerization relatively large volumes of solvent must be utilized to obtain the desired block copolymer. So in the preparation of such copolymers, only 10 to 15 percent solids can be obtained conveniently.

It would be desirable if there were available an improved method for the preparation of random isopropenyl aromatic-vinyl aromatic copolymer blends with or without a diene block, particularly by a solution polymerization process wherein an in situ polymer blend of random styrene/α-methylstyrene copolymer and block polymers can be made. Furthermore, it would be desirable to have an improved method for anionic polymerization to provide polymer solutions of higher than 20 weight percent solids.

These benefits in accordance with the present invention are achieved in a process for preparing a blend of thermoplastic aromatic copolymers consisting essentially of the steps:

(a) dissolving at least one vinyl aromatic monomer of the formula:

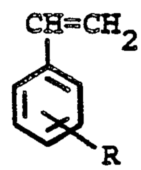

wherein R is hydrogen or a lower alkyl group containing up to four carbon atoms, optionally with butadiene or isoprene and mixtures thereof, in an isopropenyl aromatic monomer of the formula:

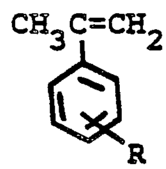

wherein R is a hydrogen or a lower alkyl group containing up to four carbon atoms to form a solution; initiating polymerization by adding an organolithium initiator to copolymerize at least a major portion of the vinyl aromatic monomer, butadiene, isoprene or mixtures with the isopropenyl monomer to provide a first solution of copolymer dissolved in isopropenyl aromatic monomer; and then terminating polymerization;

(b) dissolving additional vinyl aromatic monomer, butadiene, isoprene or mixtures thereof in the first copolymer solution; initiating polymerization by an organolithium initiator to provide a solution of blended copolymers in the isopropenyl aromatic monomer; and again terminating polymerization; and

(c) optionally repeating incremental step (b) to provide an additional copolymer in the product blend(s).

The resulting polymer solution contains at least 20 weight percent of the coplymers formed by in situ anionic initiated polymerization.

Vinyl aromatic monomers suitable for the practice of the present invention have the formula:

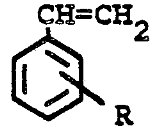

wherein R is selected from the group consisting of hydrogen, and lower alkyl groups containing up to four carbon atoms. Such monomers include styrene, para-methylstyrene, meta-ethylstyrene, and para-tertiary-butylstyrene.

Isopropenyl aromatic monomers for the practice of the present invention have the formula:

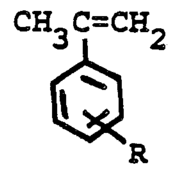

wherein R is as defined above, such as α-methylstyrene, and para-methyl-α-methylstyrene. The isopropenyl aromatic monomer is used both as active monomer and solvent; however, it may contain 0—50 weight percent based on the weight of the isopropenyl aromatic monomer of an inert hydrocarbon solvent such as cyclohexane, hexane, heptane, benzene, and toluene.

The term "random" as employed in the present invention is not used to mean that the two monomers in the copolymer are alternating in a one to one manner or confirm strictly to random statistics. It is employed to mean that extensived block-like structures of polymerized vinyl aromatic monomer or a polymerized isopropenyl aromatic monomer do not exist.

The resultant block copolymers may be elastomeric or resinous depending upon the proportions of the ingredients selected. The copolymer blend consists essentially of block copolymers having from 5 to 90 weight percent of the polydiene, preferably the polydiene is from 40 to 90 weight percent of the block copolymer. Triblock polymers prepared employing low portions of the diene, i.e., 5 to 40 weight percent polybutadiene, are generally resinous, transparent, and particularly suited for packaging applications. Polymers in accordance with the present invention which contain higher proportions of the polydiene block, for example, from 50 to 98, and preferably 50 to 90, weight percent polydiene, provide desirable thermoplastic elastomers or elastomers of improved green strength. Polymers containing from about 40 to 50 weight percent diene are what might be considered soft plastics. The molecular weight of the block copolymers in accordance with the present invention as determined by gel permeation chromatography will vary from 5,000 to 800,000. Particularly desirable polymers for most applications have a molecular weight range from 10,000 to 500,000.

Preferably the polymer block B is an elastomeric polymer block of an unsaturated diene such as butadiene, isoprene or mixtures thereof; and the polymer blocks A are plastic polymer blocks such as the random copolymers of α-methylstyrene and styrene or α-methylstyrene and para-methylstyrene. Block copolymers of the present invention may be of the linear AB or ABA configuration or the branched configuration such as $AB(BA)_n$.

In the preparation of a linear polymer such as of the ABA configuration, a difunctional lithium initiator is employed; whereas in the preparation of the branched or radial polymer having the structure $AB(BA)_n$ a polyfunctional or multifunctional lithium polymerization initiator is employed. Multifunctional lithium containing initiators and their use in the polymerization of olefinically unsaturated hydrocarbon monomers are well known in such art as U.S. Patents: 3,660,536; 3,734,973; 3,787,510; 4,172,190 and 4,205,016. Very desirable lithium initiators can be prepared by the addition of two moles of an organolithium compound, such as secondary-butyllithium, to one mole of a compound containing two 1,1-diphenylethylene groups.

Where the process of the present invention is used to prepare random copolymer of the isopropenyl aromatic monomer and the vinyl aromatic monomer, either as random copolymer or random copolymer-polydiene or graded diene polymer block in the presence of an organolithium polymerization initiator, the reaction is self-terminating with a self-terminating rate increasing with increasing temperature. Although the mechanism of this termination is not well understood, it is often unnecessary to add active hydrogen compounds to cause termination before proceeding with a subsequent polymerization step. However, a terminator can be used in partial or full amount to inactivate the polymer ends. Preferably, a terminator having 60 to 90 percent of the theoretical amount required for termination is used.

The method of the present invention can be used in many ways. The simplest embodiment can prepare a polymer of a desired molecular weight distribution. By sequential organolithium initiated polymerizations of like monomer charges, either narrow or broad molecular weight distribution is readily obtained by the use of the appropriate quantity of the organolithium initiator. By varying the monomer charge blends of any combinations of A, AB and $AB(BA)_n$ polymers are readily obtained without the necessity of conventional mechanical blending. For example in the preparation of AB block copolymer employing an initaitor such as secondary-butyllithium or normal-butyllithium, several procedures may be used. A tapered AB block copolymer can be prepared by admixing the α-methylstyrene, butadiene and styrene monomer, adding initiator to provide a tapered AB polymer. Alternatively, α-methylstyrene and diene are admixed, initiator added, the diene polymerized, subsequently the styrene monomer is added to the reaction mixture to provide a polymer with a polybutadiene block attached to a styrene-α-methylstyrene copolymer block. A similar block copolymer can be prepared by admixing the α-methylstyrene with styrene and immediately after the styrene α-methylstyrene copolymerization is complete, the diene is added resulting in AB polymer with a polydiene block and an α-methylstyrene-styrene copolymer block. ABA polymers are readily prepared employing the method of the present invention, employing a difunctional organolithium initiator by admixing, for example, α-methylstyrene, styrene and butadiene, adding initiator and on polymerization a tapered ABA α-methylstyrenestyrene

diene polymer is obtained. Alternatively, the α-methylstyrene and butadiene are admixed, the initiator added, on completion of the polymerization of the butadiene, the styrene type monomer such as styrene is added to provide an ABA α-methylstyrene-styrene terminal block and a polybutadiene center block. Polymers of the ABA configuration are also prepared using monofunctional initiator such as secondary-butyllithium or a normal-butyllithium by admixing the α-methylstyrene and styrene monomers, adding initiator, on completion copolymerization of the monomers the diene monomer is added, on completion of polymerization of the diene a coupling agent is introduced to the reaction mixture thereby providing a polymer of ABA configuration.

Another route to an ABA polymer is to admix the aromatic monomers with a monofunctional initiator, when copolymerization of the aromatic monomers is complete, the diene monomer is added, on completion of polymerization of the diene monomer additional vinyl aromatic monomer is provided to the reaction mixture resulting in an ABA polymer having a polydiene center block and aromatic copolymer terminal blocks. Alternatively, a vinyl aromatic monomer — isopropenyl aromatic monomer mixture may be initiated and prior to completion of the copolymerization, diene monomer is added, also resulting in a polymer having ABA configuration.

So-called radial, star or multi-armed polymers desirably are prepared employing a polyfunctional initiator using the above general procedure wherein a tapered block copolymer may be obtained or a polydiene block obtained depending upon the sequence of monomer addition. An alternate route to radial block copolymers is to prepare a living polymer of the AB configuration and then employ a multifunctional coupling agent, for example, silicon tetrachloride or divinylbenzene.

By utilizing the process of the present invention, for example, styrene and initiator are intermittently added to the reaction mixture, permitted to copolymerize with the α-methylstyrene, such additions being made when polymerization had apparently stopped and become inactive. Advantageously the heat of polymerization is removed by conventional means, for example, by conduction, the use of a jacketed reactor or by vaporization of a solvent boiling at a desired polymerization temperature.

Polymerization in accordance with the present invention is generally carried out at a temperature between about 20° and 160° centigrade and most advantageously between 40° and 120°C. Because of the difference in reactivity between the vinyl aromatic monomer and the isopropenyl aromatic monomer, the isopropenyl aromatic monomer is generally present in a much higher proportion in the polymerization solution than in the resulting polymer. Also the present invention permits the solids content in the polymerization mixture to be raised significantly to a level limited only by the viscosity of the mixture which can be readily processed in the equipment.

The present invention is further illustrated by the following examples.

## Example 1

A 1-liter flask was charged with 168 grams of α-methylstyrene and 0.109 millimole of s-butyllithium in cyclohexane was added at room temperature to inactivate oxygen and other undesired impurities. The flask and contents were heated in a water bath at 57 to 70°C for about 15 minutes prior to addition of 9.2 milliliters of styrene and 0.147 millimole of a s-butyllithium in cyclohexane. The contents of the flask changed from colorless to orange red to red to orange yellow in about 10 minutes. After heating for 15 more minutes to assure self-termination of the reactive chains, 8.8 milliliters of styrene monomer and 0.136 millimole of s-butyllithium in cyclohexane were added for a second polymerization.

Four additional charges of styrene monomer and s-butyllithium were made after each previous reactive chains self-terminated as tabulated below.

| Addition No. | Styrene ml | s-BuLi m. mole | Time min.* | Between Additions |
|---|---|---|---|---|
| | | | 40 | 2 and 3 |
| 3 | 8.3 | 0.131 | | |
| | | | 15 | 3 and 4 |
| 4 | 7.9 | 0.125 | | |
| | | | 25 | 4 and 5 |
| 5 | 7.5 | 0.120 | | |
| | | | 25 | 5 and 6 |
| 6 | 7.2 | 0.115 | | |

* Time allowed for self-termination.

Twenty minutes after the 6th addition of styrene monomer and s-butyllithium, the polymer was terminated by the addition of 2-milliliters of isopropyl alcohol. A sample of the polymer solution weighing 1.823 grams was heated in vacuo at 170°C for 30 minutes yielding 0.805 gram of residual polymer (44.2 weight percent). The remainder of the reation mixture was diluted with methanol to precipitate the polymer. Analysis by nuclear magnetic resonance indicated the polymer contained 51 weight percent α-methylstyrene and 49 weight percent styrene. The weight average molecular weight as determined by gel

permeation chromatography was 143,000 and the ratio of weight average molecular weight to number average molecular weight was 1.43.

Example 2

A tri-block copolymer was prepared in the following manner:

A difunctional lithium initiator was prepared by reacting 9.542 millimoles of s-butyllithium in 17.1 milliliters of cyclohexane with 4.776 millimoles of 1,3-di(1-phenylethenyl) benzene in 40 milliliters of toluene for a period of about 20 hours at room temperature. The resultant solution containing 0.0817 millimole of dilithium initiator per milliliter of solution.

A jacketed reactor having a hollow auger agitator was charged with 1400 milliliters of α-methylstyrene and 0.67 millimole of s-butyllithium in cyclohexane at room temperature to inactivate oxygen and other active hydrogen impurities present. 54.2 Grams of 1,3-butadiene and 63.5 grams of styrene were added and heated to about 55°C. 26 Milliliters (2.12 millimole) of the difunctional lithium initiator solution were added and the jacket temperature held at about 55°C. After about 90 minutes the color of the reactor contents changed from yellow to red and the temperature of the reaction mixture rose to about 70°C. The jacket temperature was maintained at about 55°C for about 110 minutes after the addition of the difunctional lithium initiator and then raised to 75°C for an additional 30 minutes to assure self-termination of the reactive chains. About 130 grams of the reaction mixture was withdrawn for analysis. The polymer recovered from this solution (13.8 weight percent solids) is designated as Polymer A.

The contents of the reactor were cooled to about 25°C and 46.4 grams of butadiene and 54.5 grams of styrene were added and then heated to about 55°C. 21 milliliters of the difunctional lithium initiator solution were added containing 1.72 millimoles of initiator. After 110 minutes, the temperature of the jacket was raised to 65°C. About 135 minutes after the second addition of styrene and butadiene, the temperature of the reaction mixture rose to about 77°C and 30 minutes later, the reaction was terminated by the addition of 3 milliliters of isopropyl alcohol. The reaction mixture contained 24.8 weight percent solids (Polymer B). The blend of Polymers A and B was recovered from the reaction mixture to which a small amount of Ionol (2,6-ditertiarylbutyl-4-methylphenol) was added as a stabilizer by precipitation in methanol. Polymers A and B had a molecular weight of 114,000 and 106,000 respectively, as determined by gel permeation chromatography. Both Polymers A and B wer analyzed by nuclear magnetic resonance and the weight compositions were:

| | | |
|---|---|---|
| Polymer A: | α-Methylstyrene | 32.2% |
| | Styrene | 35.7% |
| | Butadiene | 32.1% |
| Polymer B: | α-Methylstyrene | 32.3% |
| | Styrene | 34.9% |
| | Butadiene | 32.8% |

The properties of Polymer B as determined from compression molded specimens are:

| | |
|---|---|
| Tensile yield strength | 22.4 MPa |
| Ultimate elongation | 45% |
| Tensile modulus | 1120 MPa |
| Izod impact strength | 46 J/m notch |
| Vicat softening point | 116°C |

Example 3

A tapered styrene-α-methylstyrene isoprene styrene-α-methylstyrene triblock copolymer was prepared following the procedure of Example 2 except that isoprene was used in place of butadiene. The following quantities were employed in the initial polymerization step to prepare Polymer C:

| | |
|---|---|
| α-Methylstyrene | 1271 grams |
| Styrene | 76 grams |
| Isoprene | 49 grams |
| Dilithium initiator | 2.84 millimoles |

About 50 minutes at 70°C was allowed to assure self-termination.

In the second stage of polymerization to provide Polymer D, the following quantities of reactants were used:

| | |
|---|---|
| Polymer solution from C | 1274 grams |
| Styrene | 63.5 grams |
| Isoprene | 40.8 grams |
| Dilithium initiator | 2.03 millimoles |

On termination with 1 milliliter isopropyl alcohol, the reaction mixture was about 24.1 percent by weight solids.

The composition, molecular weights and properties of the resultant triblock copolymers are given below:

Composition (by weight)

| | | |
|---|---|---|
| Polymer C: | α-Methylstyrene | 36.7% |
| | Styrene | 38.6% |
| | Isoprene | 24.7% |
| Polymer D: | α-Methylstyrene | 37.1% |
| | Styrene | 38.0% |
| | Isoprene | 24.9% |

The molecular weight as determined by gel permeation chromatography of Polymer C was 117,000; Polymer D was 95,000. The physical properties of Polymer D were:

| | |
|---|---|
| Tensile strength at break | 15.4 MPa |
| Ultimate elongation | 0.9% |
| Tensile modulus | 1760 MPa |
| Izod impact strength | 20 J/m of notch |
| Vicat softening point | 114°C |

Example 4

A tapered styrene-α-methylstyrene butadieneisoprene styrene-α-methylstyrene triblock copolymer was prepared by the procedure of Example 2 except that a one-to-one by weight mixture of butadiene and isoprene was employed in place of butadiene.

Polymer E was prepared employing the following ingredients:

| | |
|---|---|
| α-Methylstyrene | 1271 grams |
| Styrene | 76 grams |
| Isoprene | 31 grams |
| Butadiene | 31 grams |
| Dilithium initiator | 2.90 millimoles |

About 30 minutes at 70°C was allowed to assure the self-termination.

Polymer F utilized the following ingredients:

| | |
|---|---|
| Polymer solution from E | 1309 grams |
| Styrene | 63.5 grams |
| Isoprene | 25.9 grams |

| | |
|---|---|
| Butadiene | 25.8 grams |
| Dilithium initiator | 2.17 millimoles |

On termination with 1 milliliter isopropyl alcohol, the reaction mixture was 25.9 weight percent solids.

The triblock copolymers each had a molecular weight of 110,000 as determined by gel permeation chromatography. The composition in weight percent of Polymers E and F was 33.7 percent α-methylstyrene; 36.5 percent styrene; 14.9 percent isoprene and 14.9 percent butadiene. The physical properties of Polymer F were:

| | |
|---|---|
| Tensile yield strength | 25.0 MPa |
| Ultimate elongation | 27.2% |
| Tensile modulus | 1020 MPa |
| Izod impact strength | 28 J/m of notch |
| Vicat softening point | 116°C |

Example 5

Tapered styrene-α-methylstyrene butadiene-isoprene styrene-α-methylstyrene triblock copolymer and a styrene-α-methylstyrene copolymer were prepared by repeated addition employing the procedure of Example 2 with the following exceptions: Polymer G is a triblock copolymer prepared from a one-to-one by weight mixture of butadiene and isoprene in place of butadiene. Polymer H is a mixture of Polymer G and a styrene-α-methylstyrene copolymer without diene in the second stage of polymerization.

The following reactants were employed:

For the preparation of Polymer G:

| | |
|---|---|
| α-Methylstyrene | 1271 grams |
| Styrene | 33.6 grams |
| Isoprene | 22.5 grams |
| Butadiene | 23.2 grams |
| Dilithium initiator | 2.20 millimoles |

About 40 minutes at 70°C was allowed to assure the self-termination.

And for Polymer H, the following reactants were employed:

| | |
|---|---|
| Polymer solution from G | 1256 grams |
| Styrene | 59 grams |
| s-Butyllithium | 1.19 millimoles |

Polymer G had a molecular weight of 106,000 as determined by gel permeation chromatography and a weight composition of 34.1 percent α-methylstyrene; 27.9 percent styrene; 18.7 percent isoprene and 19.3 percent butadiene.

Polymer H was determined to have a molecular weight of 97,000 by gel permeation chromatography and a weight composition of 42.4 percent α-methylstyrene; 39.1 percent styrene; 9.1 percent isoprene and 9.4 percent butadiene. The physical properties of Polymer H were determined on compression molding to be:

| | |
|---|---|
| Tensile yield strength | 40.1 MPa |
| Ultimate elongation | 3.6% |
| Tensile modulus | 2300 MPa |
| Izod impact strength | 26 J/m of notch |
| Vicat softening point | 132°C |

Example 6

A tapered styrene-α-methylstyrene butadiene styrene-α-methylstyrene triblock copolymer was prepared in the following manner.

A 114 l (30 gallon) reactor was charged with 61.10 kg α-methylstyrene which had been purified by passing through an activated alumina bed and the α-methylstyrene was deoxygenated at 20°C by applying vacuum and releasing with nitrogen. The remaining impurities were deactivated by adding 44 milliliters (63 millimoles) of 1.4318 N sec-butyllithium solution. Then 1.65 kg uninhibited, oxygen-free styrene and 6.62 kg 1,3-butadiene purified by passing through a bed of DOWEX* MSC—1 K+ form ion exchange beads and then activated alumina were added. An aliquot of 1.9 kg of the charge was withdrawn from the reactor. To 1.8 kg of this solution 10 milliliters of purified tetrahydrofuran was added and 0.1663 N secbutyllithium solution in cyclohexane was added until color appeared.

Based on this titration the amount of impurities in the remaining feed of 59.43 kg α-methylstyrene, 6.44 kg butadiene and 1.61 kg styrene, was determined to be equivalent to 5 millimoles of difunctional lithium initiator. The contents of the reactor was heated to 38°C and 5 millimoles of difunctional lithium initiator solution prepared as in Example 2 was added to inactivate the impurities. About 5 minutes later, 91 millimoles of the difunctional lithium initiator solution (0.0919 millimole per gram of solution) was added for initiation. Within 2 hours, the temperature of the reaction mixture rose to 87°C. After 2.5 hours, a solution of 9.5 milliliters isopropyl alcohol in 20 milliliters toluene was added to terminate the polymer chains. About 1.2 kg of the reaction mixture was withdrawn for analysis. The polymer recovered from this solution (15.5 weight percent solids) is designated Polymer I.

The contents of the reactor were cooled to 20°C and 6.05 kg of butadiene and 1.55 kg of styrene were added. The reactor was heated to 47°C, and 83 millimoles of the difuctional lithium initiator solution (0.0899 millimole per gram of solution) added. Within 70 minutes the temperature of the reaction mixture rose to 95°C. After 100 minutes, 30 milliliters of isopropyl alcohol was added. The reaction mixture contained 26.8 weight percent solids (Polymer J). Polymers I and J were recovered from an aliquot (about 100 grams) of the reaction mixture to which a small amount of Ionol was added as stabilizer by precipitation in methanol. Polymers I and J had a molecular weight of 125,000 and 132,000 respectively, as determined by gel permeation chromatography. The composition in weight percent of both Polymers I and J was 23.9 percent α-methylstyrene; 15.0 percent styrene; and 61.1 percent butadiene as analyzed by nuclear magnetic resonance method. The properties of Polymers I and J as determined from compression molded specimens are:

| | | |
|---|---|---|
| Polymer I: | Tensile rupture strength | 21.3 MPa |
| | Elongation at break | 730% |
| Polymer J: | Tensile rupture strength | 22.3 MPa |
| | Elongation at break | 780% |

Example 7

A tapered styrene-α-methylstyrene butadiene styrene-α-methylstyrene triblock copolymer was prepared by the procedure of Example 6 with one more addition of monomers and initiator.

Polymer K was prepared employing the following ingredients:

| | |
|---|---|
| α-Methylstyrene | 58.28 kg |
| Styrene | 3.00 kg |
| Butadiene | 2.61 kg |
| Dilithium initiator | 128 millimoles |

After the reaction was completed, a solution of 12.9 milliliters isopropyl alcohol in 20 milliliters toluene was added to terminate the polymer chains. This solution contained 14.25 weight percent solids.

Polymer L was prepared by utilizing the following ingredients:

| | |
|---|---|
| Polymer solution from K | 64.33 kg |
| Styrene | 2.77 kg |
| Butadiene | 2.37 kg |
| Dilithium initiator | 121 millimoles |

After the reaction was completed, a solution of 12.6 milliliters isopropyl alcohol in 20 milliliters toluene was added to terminate the reactive chains. This solution contained 24.63 weight percent solids.

Polymer M was prepared by using the following ingredients:

| | |
|---|---|
| Polymer solution from L | 68.94 kg |
| Styrene | 2.33 kg |
| Butadiene | 1.99 kg |
| Dilithium initiator | 103 millimoles |

On termination wth 43 milliliters acetic acid in 25 milliliters toluene, the reaction mixture contained 32.44 weight percent solids.

The composition (by weight) of the resultant triblock copolymers as analyzed by nuclear magnetic resonance method are given below:

| | | |
|---|---|---|
| Polymer K: | α-methylstyrene | 33.9% |
| | Styrene | 34.3% |
| | Butadiene | 31.8% |
| Polymer L: | α-methylstyrene | 33.1% |
| | Styrene | 35.2% |
| | Butadiene | 31.7% |
| Polymer M: | α-methylstyrene | 33.4% |
| | Styrene | 35.4% |
| | Butadiene | 31.2% |

The molecular weight as determined by gel permeation chromatography of Polymer K was 100,000; Polymer L was 95,000; and Polymer M was 95,000.

Example 8

A polymer blend consisting of two styrene-α-methylstyrene butadiene styrene-α-methylstyrene triblock copolymers with different compositions and styrene-α-methylstyrene random copolymers was prepared. The procedure of Example 6 was repeated with three more additions of styrene monomer and initiator.

The ingredients employed for making polymers N, O, P, Q, and R are given below:

For making polymer N

| | |
|---|---|
| α-methylstyrene | 58.99 kg |
| Styrene | 1.78 kg |
| Butadiene | 1.52 kg |
| Dilithium initiator | 108 millimoles |

After the reaction was completed, the solution was kept at 62°C for 15 hours to assure the self-termination of the reactive chains. This solution contained 8.72 weight percent solids.

For making polymer O

| | |
|---|---|
| Polymer solution from N | 63.12 kg |
| Styrene | 0.68 kg |
| Butadiene | 4.27 kg |
| Dilithium initiator | 86 millimoles |

After the reaction was completed, the solution was kept at 65°C for 13 hours to assure the self-termination of the reactive chains. This solution contained 18.46 weight percent solids.

For making polymer P

| | |
|---|---|
| Polymer solution from O | 68.74 kg |
| Styrene | 2.81 kg |
| Sec-butyllithium | 40 millimoles |

On completion of the reaction, the solution was kept at 75°C for 40 minutes to assure the self-termination of the reactive chains. This solution contained 26.48 weight percent solids.

For making polymer Q

| | |
|---|---|
| Polymer solution from P | 71.55 kg |
| Styrene | 2.30 kg |
| Sec-butyllithium | 36 millimoles |

On completion of the reaction, the solution was kept at 75°C for 40 minutes to assure the self-termination of the reactive chains. This solution contained 32.48 weight percent solids.

For making polymer R

| | |
|---|---|
| Polymer solution from Q | 73.85 kg |
| Styrene | 1.59 kg |
| Sec-butyllithium | 37 millimoles |

After the reaction was completed 50 milliliters isopropyl alcohol was added. The solution contained 37.13 weight percent solids.

The composition of the resultant polymers N, O, P, Q and R as determined by nuclear magnetic resonance are given below:

| | Composition, weight percent | | |
|---|---|---|---|
| Polymer | Butadiene | Styrene | α-methylstyrene |
| N | 28.1 | 31.5 | 40.4 |
| O | 45.9 | 22.5 | 31.6 |
| P | 31.7 | 30.7 | 37.6 |
| Q | 25.1 | 33.8 | 41.1 |
| R | 21.5 | 35.1 | 43.4 |

The properties of polymer R as determined from injection molded specimens are:

| | |
|---|---|
| Tensile yeild strength | 36.5 MPa |
| Ultimate elongation | 16% |
| Tensile modulus | 2480 MPa |
| Izod impact strength | 25 J/m of notch |
| Vicat softening point | 122°C |

**Claims**

1. A process for preparing a blend of copolymers, consisting essentially of the steps:
(a) dissolving at least one vinyl aromatic monomer of the formula:

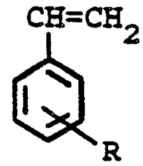

wherein R is hydrogen or a lower alkyl group containing up to four carbon atoms, optionally with butadiene, or isoprene and mixtures thereof, in an isopropenyl aromatic monomer of the formula:

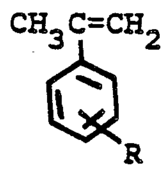

wherein R is a hydrogen or a lower alkyl group containing up to four carbon atoms to form a solution; initiating polymerization by adding an organolithium initiator to copolymerize at least a major portion of the vinyl aromatic monomer, butadiene, isoprene or mixtures with the isopropenyl monomer to provide a first solution of copolymer dissolved in isopropenyl aromatic monomer; and then terminating polymerization;

(b) dissolving additional vinyl aromatic monomer, butadiene, isoprene or mixtures thereof in the first co-polymer solution; initiating polymerization by an organolithium initiator to provide a solution of blended copolymers in the isopropenyl aromatic monomer; and again terminating polymerization; and

(c) optionally repeating incremental step (b) to provide an additional copolymer in the product blend(s).

2. The process of Claim 1 wherein the copolymer blend prepared in situ consists essentially of random copolymers of a vinyl aromatic monomer and an isopropenyl aromatic monomer.

3. The process of Claim 1 wherein the copolymer blend consists essentially of block copolymers having from 5 to 90 weight percent of the polydiene.

4. The process of Claim 3 wherein the copolymer blend consists essentially of a vinyl aromatic-isopropenyl aromatic random copolymer and a block copolymer having from 5 to 40 weight percent of the polydiene.

5. The process of Claim 3 wherein the polydiene is from 40 to 90 weight percent of the block copolymer.

6. The method of Claim 1 wherein the isopropenyl aromatic monomer is α-methylstyrene, the vinyl aromatic monomer is styrene.

7. The method of Claim 1 wherein the vinyl aromatic monomer is para-methylstyrene.

8. The method of Claim 1 wherein the diene is butadiene.

9. The process of Claim 1 wherein the in situ prepared copolymer blend is a thermoplastic elastomer.

10. The process of Claim 1 wherein the resulting polymer solution contains at least 20 weight percent of copolymer formed by in situ anionically initiated polymerization.

**Patentansprüche**

1. Verfahren zum Herstellen einer Mischung von Copolymeren im wesentlichen bestehend aus den Schritten:
(a) Auflösen mindestens eines vinylaromatischen Monomer der Formel

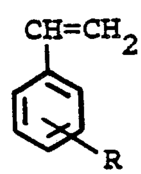

in der R Wasserstoff oder eine niedere Alkylgruppe mit bis zu vier Kohlenstoffatomen ist, gegebenenfalls mit Butadien oder Isopren oder Mischungen derselben in einem isopropenylaromatischen Monomer der Formel

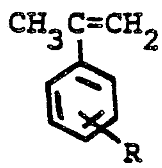

in der R Wasserstoff oder eine niedere Alkylgruppe mit bis zu vier Kohlenstoffatomen ist, um eine Lösung aus zubilden, Einleiten der Polymerisation durch Zugeben eines Organolithiumstarters, um mindestens den Hauptteil des vinylaromatischen Monomer, Butadien, Isopren oder Mischungen derselben mit dem Isopropenylmonomer zu copolymerisieren, um eine erste Lösung von Copolymer gelöst in isopropenylaromatischem Monomer zu schaffen, und anschließendes Beenden der Polymerisation,

(b) Auflösen zusätzlichen vinylaromatischen Monomer, Butadien, Isopren oder Mischungen derselben in der ersten Copolymerlösung, Einleiten der Polymerisation durch einen Organolithiumstarter, um eine Lösung von gemischten Coplymeren in dem isopropenylaromatischen Monomer zu schaffen, und erneutes Beenden der Polymerisation, und

(c) gegebenenfalls zusätzliches Wiederholen von Schritt (b), um eine zusätzliches Copolymer in der (den) Produktmischung(en) zu schaffen.

2. Verfahren nach Anspruch 1, dadurch gekennzeichnet, daß die in situ hergestellte Copolymermischung im wesentlichen besteht aus statistischen Copolymeren eines vinylaromatischen Monomer und eines isopropenylaromatischen Monomer.

3. Verfahren nach Anspruch 1, dadurch gekennzeichnet, daß die Copolymermischung im wesentlichen besteht aus Blockcopolymeren mit von 5 bis 90 Gew.-% des Polydien.

4. Verfahren nach Anspruch 3, dadurch gekennzeichnet, daß die Copolymermischung im wesentlichen besteht aus einem vinylaromatischen-isopropenylaromatischen statistischen Copolymer und einem Blockcopolymer mit von 5 bis 40 Gew.-% des Polydien.

5. Verfahren nach Anspruch 3, dadurch gekennzeichnet, daß das Polydien von 40 bis 90 Gew.-% des Blockcopolymeren ausmacht.

6. Verfahren nach Anspruch 1, dadurch gekennzeichnet, daß das isopropenylaromatische Monomer α-Methylstyrol ist, das vinylaromatische Monomer Styrol ist.

7. Verfahren nach Anspruch 1, dadurch gekennzeichnet, daß das vinylaromatische Monomer p-Methylstyrol ist.

8. Verfahren nach Anspruch 1, dadurch gekennzeichnet, daß das Dien Butadien ist.

9. Verfahren nach Anspruch 1, dadurch gekennzeichnet, daß die in situ hergestellte Copolymermischung ein thermoplastisches Elastomer ist.

10. Verfahren nach Anspruch 1, dadurch gekennzeichnet, daß die erhaltene Polymerlösung mindestens 20 Gew.-% in situ durch anionisch gestartete Polymerisation hergestelltes Copolymer enthält.

**Revendications**

1. Procédé de préparation d'un mélange de copolymères, consistant essentiellement en les étapes suivantes:

(a) dissolution d'au moins un monomère vinyl-aromatique de formule:

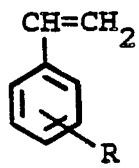

dans laquelle R est un hydrogène ou un groupe alkyle inférieure contenant jusqu'à 4 atomes de carbone, éventuellement avec du butadiène, ou de l'isoprène ou des mélanges de ceux-ci, dans un monomère isopropényl-aromatique de formule:

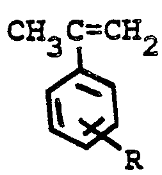

dans laquelle R est un hydrogène ou un groupe alkyle inférieur contenant jusqu'à 4 atomes de carbone, pour former une solution; initiation de la polymérisation par addition d'un initiateur organolithié pour

copolymériser au moins une majeure partie du monomère vinyl-aromatique, du butadiène, de l'isoprène ou des mélanges, avec le monomère isopropénylique, pour obtenir une première solution de copolymère dissous dans un monomère isopropényl-aromatique; puis terminaison de la polymérisation;

(b) dissolution d'une quantité supplémentaire de monomère vinyl-aromatique, de butadiène, d'isopréne ou de mélanges de ceux-ci dans la première solution de copolymère; initiation de la polymérisation par un initiateur organolithié pour obtenir une solution de copolymères mélangés dans le monomère isopropényl-aromatique; et de nouveau terminaison de la polymérisation; et

(c) répétition éventuelle de l'étape incrémentielle (b) pour obtenir un copolymère suplémentaire dans le(s) mélange(s) produit(s).

2. Procédé selon la revendication 1, dans lequel le mélange de copolymères préparé in situ est essentiellement constitué de copolymères statistiques d'un monomère vinylaromatique et d'un monomère isopropényl-aromatique.

3. Procédé selon la revendication 1, dans lequel le mélange de copolymères est essentiellement constitué de copolymères séquencés comportant de 5 à 90% en poids du polydiène.

4. Procédé selon la revendication 3, dans lequel le mélange de copolymères est essentiellement constitué d'un copolymère statistique vinyl-aromatique/isopropényl-aromatique et d'un copolymére séquencé comporrant de 5 à 40% en poids du polydiène.

5. Procédé selon la revendication 3, dans lequel le polydiène constitue de 40 à 90% en poids du copolymère séquencé.

6. Procédé selon la revendication 1, dans lequel le monomère isopropényl-aromatique est l'α-méthylstyrène, le monomère vinyl-aromatique est le styrène.

7. Procédé selon la revendication 1, dans lequel le monomère vinyl-aromatique est le para-méthylstyrène.

8. Procédé selon la revendication 1, dans lequel le diène est le butadiène.

9. Procédé selon la revendication 1, dans lequel le mélange de copolymères préparé in situ est un élastomère thermoplastique.

10. Procédé selon la revendication 1, dans lequel la solution de polymère résultante contient au moins 20% en poids de copolymère formé par polymérisation initiée par voie anionique in situ.